(19)

**Europäisches Patentamt**
**European Patent Office**
**Office européen des brevets**

(11) **EP 4 726 803 A1**

(12) **EUROPEAN PATENT APPLICATION**

(43) Date of publication:
**15.04.2026 Bulletin 2026/16**

(21) Application number: **25189778.1**

(22) Date of filing: **16.07.2025**

(51) International Patent Classification (IPC):
**H01M 4/133** $^{(2010.01)}$    **H01M 4/36** $^{(2006.01)}$
**H01M 4/587** $^{(2010.01)}$

(52) Cooperative Patent Classification (CPC):
**H01M 4/587; H01M 4/133; H01M 4/364;**
**H01M 4/366**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority:  **14.10.2024  KR 20240139118**

(71) Applicant: **SAMSUNG SDI CO., LTD.**
**Yongin-si, Gyeonggi-do 17084 (KR)**

(72) Inventors:
• **AHN, Sunyhik**
**17084 Yongin-si, Gyeonggi-do (KR)**

• **SHIN, Donghyun**
**17084 Yongin-si, Gyeonggi-do (KR)**
• **KIM, Jaehong**
**17084 Yongin-si, Gyeonggi-do (KR)**
• **KWON, Hyejin**
**17084 Yongin-si, Gyeonggi-do (KR)**
• **KIM, Hyunwoo**
**17084 Yongin-si, Gyeonggi-do (KR)**
• **SEO, Sungjin**
**17084 Yongin-si, Gyeonggi-do (KR)**
• **KIM, Dannbee**
**17084 Yongin-si, Gyeonggi-do (KR)**

(74) Representative: **Michalski Hüttermann & Partner**
**Patentanwälte mbB**
**Kaistraße 16A**
**40221 Düsseldorf (DE)**

(54) **NEGATIVE ELECTRODE AND RECHARGEABLE LITHIUM BATTERY INCLUDING THE SAME**

(57)    Disclosed are negative electrodes and rechargeable lithium batteries. The negative electrode includes a negative electrode current collector and a negative electrode active material layer thereon. The negative electrode active material layer includes a first graphite having a first average particle diameter and a second graphite having a second average particle diameter. The second average particle diameter is greater than the first average particle diameter. The negative electrode active material layer includes a first negative electrode active material layer on the negative electrode current collector, a second negative electrode active material layer on the first negative electrode active material layer, and an intermediate layer between the first and second negative electrode active material layers. The intermediate layer has a slope that is equal to or greater than about 2.33 in a normalized graph obtained by measuring a horizontal direction force that depends on a cutting depth.

FIG. 9

$$S = \Delta F_{h,norm} / \Delta CTD_{norm}$$

**Description**

CROSS-REFERENCE TO RELATED APPLICATION

This application claims priority to Korean Patent Application No. 10-2024-0139118 filed on October 14, 2024 in the Korean Intellectual Property Office.

BACKGROUND

The present disclosure relates to a negative electrode, and a rechargeable lithium battery including the electrode.

With increasing presence of battery-using electronic devices, such as, e.g., mobile phones, laptop computers, electric vehicles, and the like, there is increasing demand for rechargeable batteries with high energy density and high capacity. Improving performance of rechargeable lithium batteries may be advantageous.

A rechargeable lithium battery includes a positive electrode, a negative electrode, and an electrolyte, the positive and negative electrodes include an active material in which intercalation and deintercalation are possible, and generates electrical energy caused by oxidation and reduction reactions when lithium ions are intercalated and deintercalated.

SUMMARY

An example embodiment of the present disclosure includes a negative electrode with low ionic resistance.

An example embodiment of the present disclosure includes a rechargeable lithium battery with desired or improved rapid charge lifespan.

According to an example embodiment of the present disclosure, a negative electrode may include a negative electrode current collector, and a negative electrode active material layer on the negative electrode current collector. The negative electrode active material layer may include a first graphite having a first average particle diameter, and a second graphite having a second average particle diameter. The second average particle diameter may be greater than the first average particle diameter. The negative electrode active material layer may include a first negative electrode active material layer on the negative electrode current collector, a second negative electrode active material layer on the first negative electrode active material layer, and an intermediate layer between the first negative electrode active material layer and the second negative electrode active material layer. The intermediate layer may have a slope that is equal to or greater than about 2.33 in a normalized graph obtained by measuring a horizontal direction force that depends on a cutting depth that is measured while a surface and interfacial measuring analysis system (SAICAS) is used to perform a diagonal cutting from a surface of the negative electrode active material layer to the negative electrode current collector.

According to an example embodiment of the present disclosure, a rechargeable lithium battery may include the negative electrode discussed above.

BRIEF DESCRIPTION OF DRAWINGS

FIG. 1 is a simplified conceptual diagram illustrating a rechargeable lithium battery according to an example embodiment of the present disclosure.

FIGS. 2 to 5 are simplified diagrams illustrating a rechargeable lithium battery according to an example embodiment of the present disclosure, with FIG. 2 illustrating a cylindrical battery, FIG. 3 illustrating a prismatic battery, and FIGS. 4 and 5 illustrating pouch-type batteries.

FIG. 6 is a cross-sectional view illustrating a negative electrode for a rechargeable lithium battery according to an example embodiment of the present disclosure.

FIG. 7 is an enlarged view illustrating a negative electrode for a rechargeable lithium battery according to an example embodiment of the present disclosure.

FIG. 8 is a diagram illustrating a procedure for cutting a negative electrode active material layer of FIG. 6 by using a surface and interfacial measuring analysis system (SAICAS).

FIG. 9 illustrates the SAICAS result according to an example embodiment of the present disclosure.

FIGS. 10 and 11 are enlarged views illustrating a negative electrode for a rechargeable lithium battery according to an example embodiment of the present disclosure.

FIG. 12 illustrates SAICAS results of negative electrodes according to Embodiment 1 and Comparative of the present disclosure.

FIG. 13 illustrates a rapid charge lifespan result of rechargeable lithium batteries according to Embodiment 1 and Comparative.

DETAILED DESCRIPTION OF EMBODIMENTS

In order to sufficiently understand the configuration and effect of the present disclosure, some example embodiments of the present disclosure are described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.

In this description, it is understood that, when an element is referred to as being "on" another element, the element can be "directly on" the other element, or intervening elements may be present therebetween. In the drawings, thicknesses of some components may be exaggerated for effectively explaining the technical contents. Like reference numerals refer to like elements throughout the specification.

Some example embodiments detailed in this description are discussed with reference to sectional and/or plan views as ideal example views of the present disclosure. In the drawings, thicknesses of layers and regions may be exaggerated for effectively explaining the technical contents. Accordingly, regions illustrated in the drawings as examples have general properties, and shapes of regions illustrated in the drawings as examples are included to disclose specific shapes as examples but not limited to the scope of the present disclosure. It is understood that, although the terms "first", "second", "third," and the like, may be included herein to describe various elements, these elements should not be limited by these terms. These terms are only included to distinguish one element from another element. The example embodiments explained and illustrated herein include complementary embodiments thereof.

The terms in this description are merely included to describe various example embodiments, but are not intended to limit the present disclosure. Unless otherwise specially noted in this description, the expression of singular form may include the expression of plural form. The terms "comprises/includes" and/or "comprising/including" used in this description do not exclude the presence or addition of one or more other components.

In this description, the term "combination thereof" may refer to a mixture, a stack, a composite, a copolymer, an alloy, a blend, or a reaction product.

Unless otherwise especially defined in this description, a particle diameter may be an average particle diameter. In addition, a particle diameter indicates an average particle diameter ($D_{50}$) where a cumulative volume is about 50 volume % in a particle size distribution. The average particle diameter ($D_{50}$) may be measured by a method widely known to those skilled in the art, for example, by a particle size analyzer, a transmission electron microscope (TEM) image, or a scanning electron microscope (SEM) image. Alternatively, a dynamic light-scattering measurement device is included to perform a data analysis, the number of particles is counted for each particle size range, and from this, an average particle diameter ($D_{50}$) value may be obtained through a calculation. Dissimilarly, a laser scattering method may be utilized to measure the average particle diameter ($D_{50}$). In the laser scattering method, a target particle is dispersed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter ($D_{50}$) is calculated in the 50% standard of particle diameter distribution in the measurement device.

In this description, each of phrases as "A or B," "at least one of A and B," "at least one of A or B," "A, B, or C," "at least one of A, B, and C," and "at least one of A, B, or C," may include any one of, or all possible combinations of, the items enumerated together in a corresponding one of the phrases.

When the terms "about" or "substantially" are used in this specification in connection with a numerical value, it is intended that the associated numerical value include a tolerance of $\pm 10\%$ around the stated numerical value. When ranges are specified, the range includes all values therebetween such as increments of 0.1%.

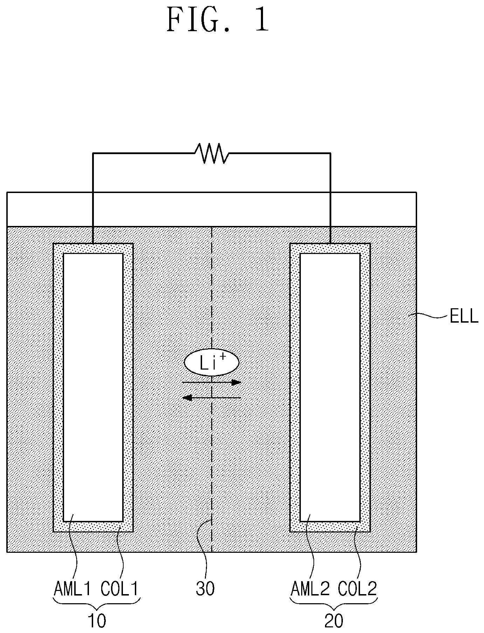

FIG. 1 is a simplified conceptual diagram illustrating a rechargeable lithium battery according to an example embodiment of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced apart from each other across the separator 30. The separator 30 may be disposed between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be or include a medium by which lithium ions are transferred between the positive electrode 10 and the negative electrode 20. In the electrolyte ELL, the lithium ions may move through the separator 30 toward one of the positive electrode 10 and the negative electrode 20.

Positive Electrode 10

The positive electrode 10 for the rechargeable lithium battery may include a current collector COL1 and a positive electrode active material layer AML1 formed on the current collector COL1. The positive electrode active material layer AML1 may include a positive electrode active material, and may further include a binder and/or a conductive material.

For example, the positive electrode 10 may further include an additive that can constitute as a sacrificial positive electrode.

An amount of the positive electrode active material in the positive electrode active material layer AML1 may range from about 90 wt% to about 99.5 wt% relative to 100 wt% of the positive electrode active material layer AML1. Amounts of the binder and the conductive material may be in a range of about 0.5 wt% to about 5 wt% relative to 100 wt% of the positive electrode active material layer AML1.

The binder may be configured to improve attachment of positive electrode active material particles to each other, and to improve attachment of the positive electrode active material to the current collector COL1. The binder may include, for example, at least one of polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but the present disclosure is not limited thereto.

The conductive material may be included to provide an electrode with conductivity, and any suitable conductive material that does not cause a chemical change in a battery may be included as the conductive material. For example, the conductive material may include a carbon-based material such as at least one of natural graphite, artificial graphite, carbon black, acetylene black, ketjen black, carbon fiber, carbon nano-fiber, and carbon nano-tube; a metal-based material in the form of a metal powder or metal fiber including one or more of copper, nickel, aluminum, and silver; a conductive polymer such as a polyphenylene derivative; or a mixture thereof.

Aluminum (Al) may be included as the current collector COL1, but the present disclosure is not limited thereto.

Positive Electrode Active Material

The positive electrode active material in the positive electrode active material layer AML1 may include a compound (e.g., lithiated intercalation compound) that can reversibly intercalate and deintercalate lithium. For example, the positive electrode active material may include at least one type of composite oxide including lithium and metal that is or includes at least one of cobalt, manganese, nickel, and a combination thereof.

The composite oxide may include a lithium transition metal composite oxide, for example, at least one of lithium-nickel-based oxide, lithium-cobalt-based oxide, lithium-manganese-based oxide, lithium-iron-phosphate-based compounds, cobalt-free nickel-manganese-based oxide, or a combination thereof.

For example, the positive electrode active material may include a compound expressed by one of chemical formulae below. $Li_aA_{1-b}B_bD_2$ (where $0.90 \leq a \leq 1$ and $0 \leq b \leq 0.5$), $Li_aE_{1-b}B_bO_{2-c}D_c$ (where $0.90 \leq a \leq 1$, $0 \leq b \leq 0.5$, and $0 \leq c \leq 0.05$), $LiE_{2-b}B_bO_{4-c}D_c$ (where $0 \leq b \leq 0.5$ and $0 \leq c \leq 0.05$), $Li_aNi_{1-b-c}Co_bB_cD_\alpha$ (where $0.90 \leq a \leq 1$, $0 \leq b \leq 0.5$, $0 \leq c \leq 0.05$, and $0 < \alpha < 2$), $Li_aNi_{1-b-c}Co_bB_cO_{2-\alpha}F_\alpha$ (where $0.90 \leq a \leq 1$, $0 \leq b \leq 0.5$, $0 \leq c \leq 0.05$, and $0 < \alpha < 2$), $Li_aNi_{1-b-c}Mn_bB_cD_\alpha$ (where $0.90 \leq a \leq 1$, $0 \leq b \leq 0.5$, $0 \leq c \leq 0.05$, and $0 < \alpha \leq 2$), $Li_aNi_{1-b-c}Mn_bB_cO_{2-\alpha}F_\alpha$ (where $0.90 \leq a \leq 1$, $0 \leq b \leq 0.5$, $0 \leq c \leq 0.05$, and $0 < \alpha < 2$), $Li_aNi_bE_cG_dO_2$ (where $0.90 \leq a \leq 1$, $0 \leq b \leq 0.9$, $0 \leq c \leq 0.5$, and $0.001 \leq d \leq 0.1$), $Li_aNi_bCo_cMn_aG_eO_2$ (where $0.90 \leq a \leq 1$, $0 \leq b \leq 0.9$, $0 \leq c \leq 0.5$, $0 \leq d \leq 0.5$, and $0.001 \leq e \leq 0.1$), $Li_aNiG_bO_2$ (where $0.9 \leq a \leq 1$ and $0.001 \leq b \leq 0.1$), $Li_aCoG_bO_2$ (where $0.90 \leq a \leq 1$ and $0.001 \leq b \leq 0.1$), $Li_aMnG_dO_2$ (where $0.90 \leq a \leq 1$ and $0.001 \leq b \leq 0.1$), $Li_aMn_2G_bO_4$ (where $0.90 \leq a \leq 1$ and $0.001 \leq b \leq 0.1$), $QO_2$, $QS_2$, $LiQS_2$, $V_2O_5$, $LiV_2O_5$, $LiIO_2$, $LiNiVO_4$, $Li_{3-f}J_2(PO_4)_3$ (where $0 \leq f \leq 2$), $Li_{3-f}Fe_2(PO_4)_3$ (where $0 \leq f \leq 2$), and $LiFePO_4$.

In the chemical formulae above, A may be or include at least one of Ni, Co, Mn, or a combination thereof, B may be or include at least one of Al, Ni, Co, Mn, Cr, Fe, Mg, Sr, V, a rare-earth element, or a combination thereof, D may be or include at least one of O, F, S, P, or a combination thereof, E may be or include at least one of Co, Mn, and a combination thereof, F may be or include at least one of F, S, P, and a combination thereof, G may be or include at least one of Al, Cr, Mn, Fe, Mg, La, Ce, Sr, V, or a combination thereof, and Q may be or include at least one of Ti, Mo, Mn, and a combination thereof, I may be or include at least one of Cr, V, Fe, Sc, Y, and a combination thereof, and J may be or include at least one of V, Cr, Mn, Co, Ni, Cu, and a combination thereof.

For example, the positive electrode active material may be or include a high-nickel-based positive electrode active material having a nickel amount that is equal to or greater than about 80 mol%, 85 mol%, 90 mol%, 91 mol%, or 94 mol% and equal to or less than about 99 mol% relative to 100 mol% of metal devoid of lithium in the lithium transition metal composite oxide. The high-nickel-based positive electrode active material may achieve high capacity, and thus may be applied to a high-capacity and high-density rechargeable lithium battery.

Separator 30

Based on a type of the rechargeable lithium battery, the separator 30 may be present between the positive electrode 10 and the negative electrode 20. The separator 30 may include one or more of polyethylene, polypropylene, and polyvinylidene fluoride, and may have a multi-layered separator thereof such as or including at least one of a polyethylene/polypropylene bi-layered separator, a polyethylene/polypropylene/polyethylene tri-layered separator, and a polypropylene/polyethylene/polypropylene tri-layered separator.

The separator 30 may include a porous substrate, and a coating layer on one surface, or on opposite surfaces, of the porous substrate, the coating layer including at least one of an organic material, an inorganic material, or a combination thereof.

The porous substrate may be or include a polymer layer including at least one of polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon™, and polytetrafluoroethylene, or may be a copolymer or mixture including two or more of the materials listed above.

The organic material may include a polyvinylidenefluoride-based copolymer or a (meth)acrylic copolymer.

The inorganic material may include an inorganic particle such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, Boehmite, or a combination thereof, but the present disclosure is not limited thereto.

The organic material and the inorganic material may be mixed in one coating layer, or may be configured as a stack of a coating layer including the organic material and a coating layer including an inorganic material.

Electrolyte ELL

The electrolyte ELL for a rechargeable lithium battery may include a non-aqueous organic solvent and a lithium salt.

The non-aqueous organic solvent may constitute a medium for transmitting ions that participate in an electrochemical reaction of the battery.

The non-aqueous organic solvent may include at least one of a carbonate-based solvent, an ester-based solvent, an ether-based solvent, a ketone-based solvent, an alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC).

The ester-based solvent may include at least one of methyl acetate, ethyl acetate, n-propyl acetate, dimethyl acetate, methyl propionate, ethyl propionate, decanolide, mevalonolactone, valerolactone, or caprolactone.

The ether-based solvent may include at least one of dibutyl ether, tetraglyme, diglyme, dimethoxyethane, 2-methyltetrahydrofuran, 2.5-dimethyltetrahydrofuran, or tetrahydrofuran. The ketone-based solvent may include cyclohexanone. The alcohol-based solvent may include at least one of ethyl alcohol or isopropyl alcohol, and the aprotic solvent may include at least one of nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane or 1.4-dioxolane; or sulfolanes.

The non-aqueous organic solvent may be included alone or in a mixture of two or more substances.

In addition, when a carbonate-based solvent is included, a cyclic carbonate and a linear carbonate may be mixed, and the cyclic carbonate and the linear carbonate may be mixed in a volume ratio in a range of about 1: 1 to about 1:9.

The lithium salt may be or include a material that dissolves in the non-aqueous organic solvent to constitute a supply source of lithium ions in a battery, and is configured to enable a basic operation of a rechargeable lithium battery and in promoting the movement of lithium ions between positive and negative electrodes. The lithium salt may include, for example, at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ where x and y are integers of 1 to 20, lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB)

Rechargeable Lithium Battery

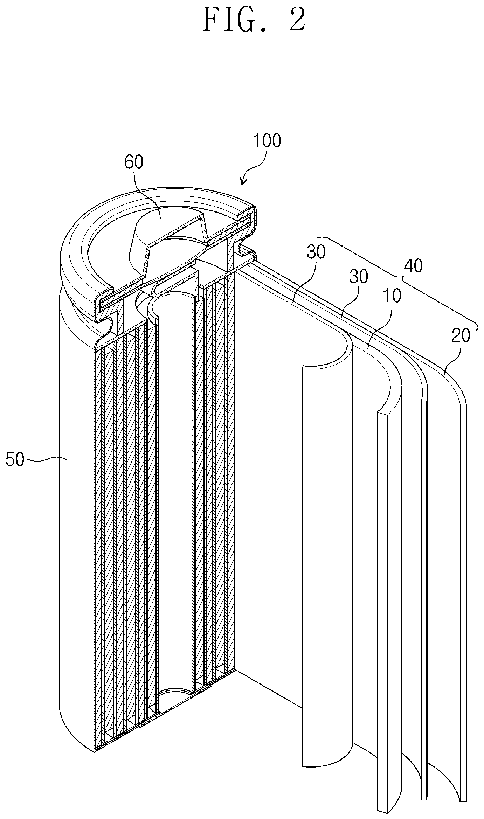

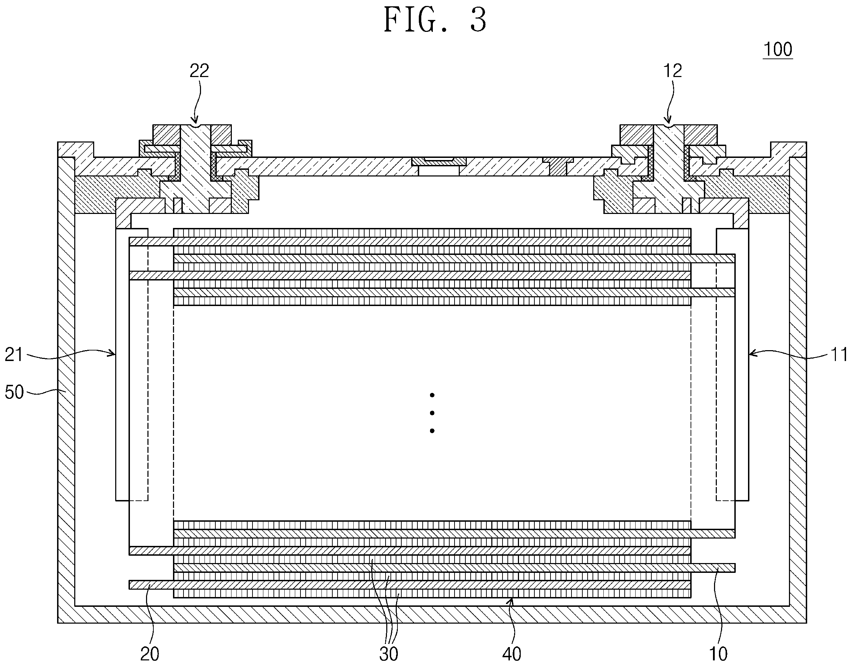

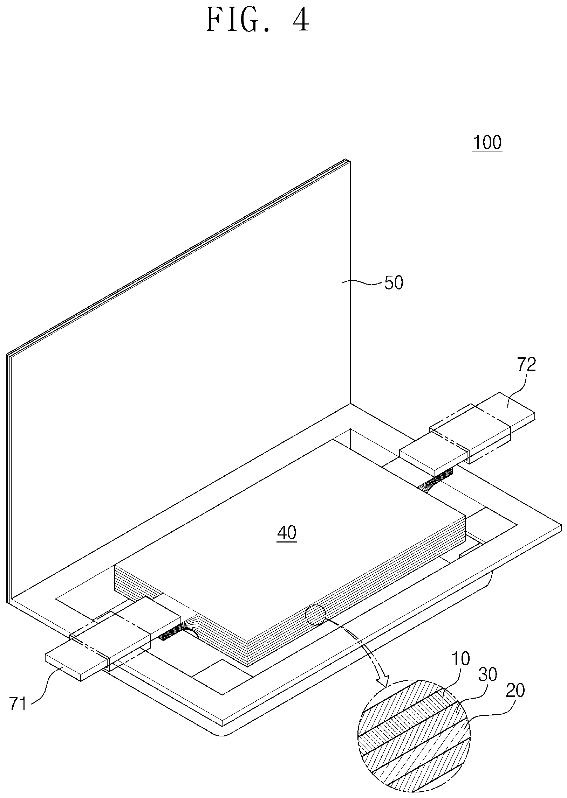

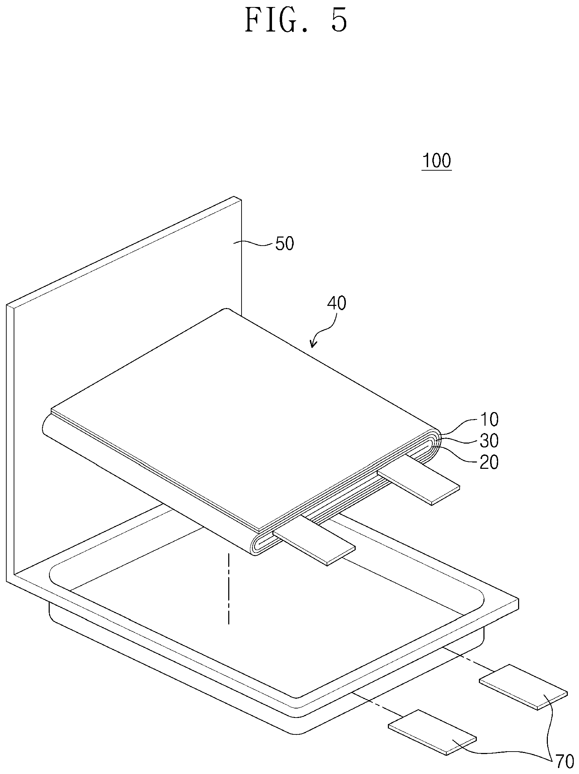

Based on a shape of a rechargeable lithium battery, the rechargeable lithium battery may be classified into cylindrical, prismatic, pouch, and coin types. FIGS. 2 to 5 illustrate simplified diagrams illustrating a rechargeable lithium battery according to an embodiment of the present disclosure, with FIG. 2 illustrating a cylindrical battery, FIG. 3 illustrating a prismatic battery, and FIGS. 4 and 5 illustrating pouch-type batteries. Referring to FIGS. 2 to 4, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte (not shown). The rechargeable lithium battery 100 may include a sealing member 60 that seals the casing 50 as illustrated in FIG. 2. In addition, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab 70 illustrated in FIG. 5, or a positive electrode tab 71 and a negative electrode tab 72 illustrated in FIG. 4, the electrode tabs 70/71/72 forming an electrical path for externally inducing a current generated in the electrode assembly 40.

The rechargeable lithium battery according to an example embodiment of the present disclosure may be applicable to, e.g., automotive vehicles, mobile phones, and/or any other electrical devices, but the present disclosure is not limited thereto.

The following describes in greater detail the negative electrode 20 according to some example embodiments of the present disclosure. In the example embodiments that follow, the same features as the features discussed with reference to FIGS. 1 to 5 are omitted for convenience of description, and a difference thereof is discussed in detail.

Negative Electrode 20

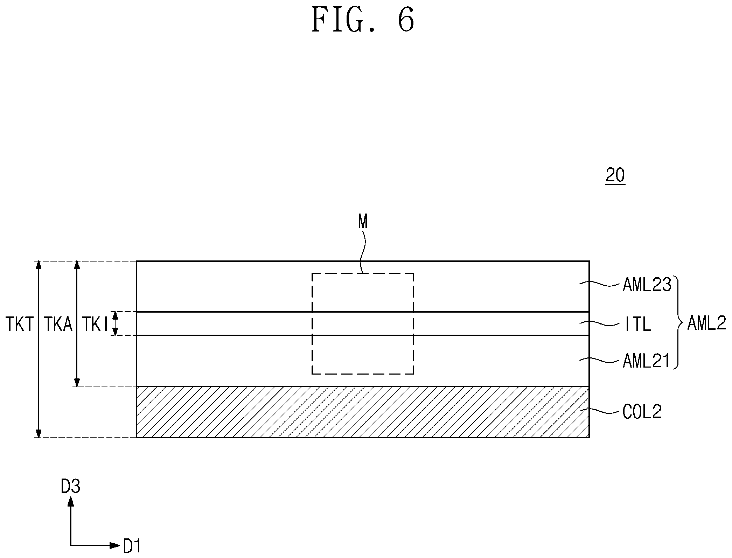

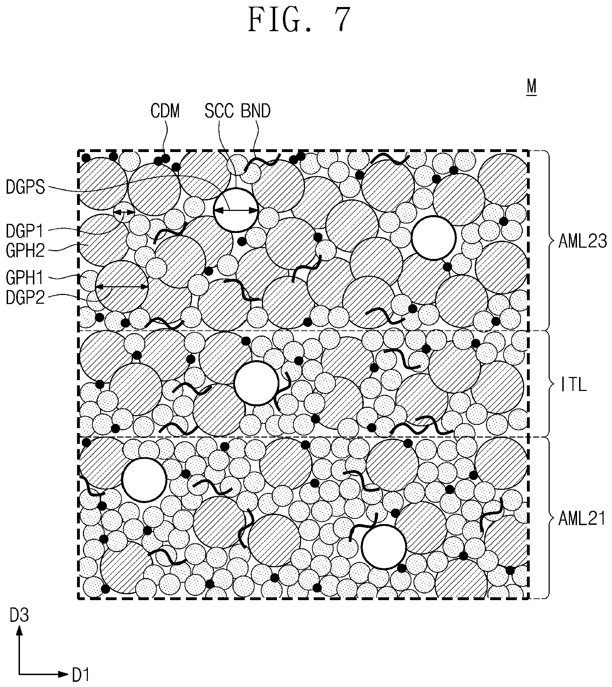

FIG. 6 is a cross-sectional view illustrating a negative electrode 20 for a rechargeable lithium battery, according to an example embodiment of the present disclosure. FIG. 7 is an enlarged view illustrating section "M" of FIG. 6, according to an example embodiment of the present disclosure.

Referring to FIG. 6, the negative electrode 20 may include a current collector COL2 and a negative electrode active material layer AML2. The negative electrode active material layer AML2 may include a first negative electrode active material layer AML21 positioned on the current collector COL2 and a second negative electrode active material layer AML23 positioned on the first negative electrode active material layer AML21. In addition, the negative electrode 20 may include an intermediate layer ITL between the first negative electrode active material layer AML21 and the second negative electrode active material layer AML23.

The negative electrode 20 may have a thickness TKT in a range of about 45 $\mu$m to about 100 $\mu$m. For example, the thickness TKT of the negative electrode 20 may be equal to or greater than about 45 $\mu$m, 50 $\mu$m, 60 $\mu$m, or 70 $\mu$m. For example, the thickness TKT of the negative electrode 20 may be equal to or less than about 100 $\mu$m, 90 $\mu$m, or 80 $\mu$m.

The negative electrode active material layer AML2 may have a thickness TKA in a range of about 40 $\mu$m to about 90 $\mu$m. For example, the thickness TKA of the negative electrode active material layer AML2 may be equal to or greater than about 40 $\mu$m, 50 $\mu$m, 60 $\mu$m, or 70 $\mu$m. For example, the thickness TKA of the negative electrode active material layer AML2 may be equal or less than about 90 $\mu$m or 80 $\mu$m.

The current collector COL2 may include at least one of a copper foil, a nickel foil, a stainless-steel foil, a titanium foil, a nickel foam, a copper foam, a polymer substrate coated with a conductive metal, or a combination thereof.

Referring to FIG. 7, the negative electrode active material layer AML2 may include a silicon-carbon composite SCC, a first graphite GPH1, and a second graphite GPH2, and may further include a binder BND and a conductive material CDM. Each of, or at least one of, the first and second negative electrode active material layers AML21 and AML23 may include a silicon-carbon composite SCC, a first graphite GPH1, and a second graphite GPH2, and may further include a binder BND and a conductive material CDM.

For example, in the negative electrode active material layer AML2, a negative electrode active material (the silicon-carbon composite SCC, the first graphite GPH1, and the second graphite GPH2) may be included in an amount of about 90 wt% to about 99 wt%, the binder BND may be included in an amount in a range of about 0.5 wt% to about 5 wt%, and the conductive material CDM may be included in an amount in a range of about 0.5 wt% to about 5 wt%.

The binder BND may be configured to improve attachment of negative electrode active material particles to each other, and to improve attachment of the negative electrode active material to the current collector COL2. The binder BND may include at least one of a non-aqueous binder, an aqueous binder, a dry binder, or a combination thereof.

The non-aqueous binder may include at least one of polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include at least one of styrene-butadiene rubber, (meth)acrylated styrene-butadiene rubber, (meth)acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, polyacrylic acid, or a combination thereof.

When an aqueous binder is included as the binder BND, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal may include at least one of Na, K, or Li.

The dry binder may include a fibrillizable polymer material, for example, at least one of polytetrafluoroethylene, polyvinylidene fluoride, polyvinylidene fluoride-hexafluoropropylene copolymer, polyethylene oxide, or a combination thereof.

The conductive material CDM may be included to provide an electrode with conductivity, and any suitable electronically conductive material that does not cause a chemical change in a battery may be included as the conductive material CDM. For example, the conductive material CDM may include a carbon-based material such as at least one of natural graphite, artificial graphite, carbon black, acetylene black, ketjen black, carbon fiber, carbon nano-fiber, and carbon nano-tube; a metal-based material in the form of a metal powder or metal fiber including one or more of copper, nickel, aluminum, and silver; a conductive polymer such as a polyphenylene derivative; or a mixture thereof. For example, the carbon nano-tube may include at least one of a single-walled carbon nano-tube SWCNT and multi-walled carbon nano-tube MWCNT.

For example, a carbon-based material that constitutes the conductive material CDM may be or include a single particle, or an assembly in the form of a secondary particle in which primary particles are assembled. When the carbon-based material is a single particle, the carbon-based material may have an average particle diameter that is equal to or less than about 100 nm, for example, ranging from about 10 nm to about 100 nm.

When the carbon-based material is an assembly, the primary particle may have a particle diameter in a range of about 20 nm to about 100 nm, and the secondary particle may have a particle diameter in a range of about 1 $\mu$m to about 20 $\mu$m.

For example, the particle diameter of the primary particle may be equal to or greater than about 20 nm, 30 nm, 40 nm, 50 nm, 60 nm, 70 nm, 80 nm or 90 nm, and equal to or less than about 100 nm, 90 nm, 80 nm, 70 nm, 60 nm, 50 nm, 40 nm, or 30 nm.

For example, the particle diameter of the secondary particle may be equal to or greater than about 1 $\mu$m, 3 $\mu$m, 5 $\mu$m, 7 $\mu$m, 10 $\mu$m, or 15 $\mu$m, and equal to or less than about 20 $\mu$m, 15 $\mu$m, 10 $\mu$m, 7 $\mu$m, 5 $\mu$m, or 3 $\mu$m.

For example, the carbon-based material that constitutes the conductive material CDM may have a one-dimensional nano structure. The one-dimensional nano structure may be defined, for example, as a structure in which one of three-dimensions is greater than the other two of three-dimensions.

The carbon-based material having a one-dimensional nano structure may have a length in a range of about 1 $\mu$m to about 20 $\mu$m. For example, the length of the carbon-based material may range from about 5 $\mu$m to about 50 $\mu$m.

The carbon-based material having a one-dimensional nano structure may have an aspect ratio in a range of about 10 to about 3,000. For example, the aspect ratio of the carbon-based material may range from about 10 to about 2,600, from about 20 to about 2,500, or from about 30 to about 2,400. The aspect ratio may be calculated as a ratio of length to diameter of the carbon-based material.

For example, the size, structure, and length of the carbon-based material that constitutes the conductive material CDM may be determined through, e.g., scanning electron microscopy (SEM), transmission electron microscopy (TEM), atomic force microscopy (AFM), and the like.

For example, the carbon-based material that constitutes the conductive material CDM may be determined through Raman spectroscopy. For example, in the case of the carbon-based material having a one-dimensional nano structure, a radial breathing mode (RBM) peak may appear in a range of about 70 cm$^{-1}$ to about 300 cm$^{-1}$ in a Raman spectrum of the conductive material CDM. For example, in the case of the carbon-based material having a one-dimensional nano structure, a G$^-$-band and a G$^+$-band may appear in a Raman spectrum of the conductive material CDM.

Referring still to FIG. 7, the silicon-carbon composite SCC may include an aggregate in which a plurality of silicon particles are aggregated, and a coating layer that surrounds the aggregate.

The silicon-carbon composite SCC may have a substantially spherical or substantially oval shape. The silicon-carbon composite SCC may have an average particle diameter DGPS in a range of about 3 $\mu$m to about 20 $\mu$m. For example, an average particle diameter may be measured by a particle size analyzer or an electron microscope.

The silicon-carbon composite SCC may have a porous structure. The silicon-carbon composite SCC may have a Brunauer-Emmett-Teller (BET) specific surface area in a range of about 1 m$^2$/g to about 10 m$^2$/g.

The silicon-carbon composite SCC may have a desired or improved capacity. The capacity of the silicon-carbon composite SCC may be greater than about 1,000 mAh/g.

There may be no limitation on shapes of the plurality of silicon particles. For example, the plurality of silicon particles may have a plate-like shape or a sphere-like shape. For example, the plurality of silicon particles may have a flake-type shape.

The plurality of silicon particles may have an average particle diameter in a range of about 10 nm to about 200 nm. When the average particle diameter of the plurality of silicon particles falls within the range above, it may be possible to reduce or prevent structural collapse and to control a volume expansion of silicon during charge and discharge.

An amount of silicon in the silicon-carbon composite SCC may be in a range of about 40 wt% to about 65 wt% relative to a weight of the silicon-carbon composite SCC. When the silicon amount falls within the range above, it may be possible to provide a rechargeable lithium battery having desired or improved capacity, efficiency, and energy density.

The coating layer may include amorphous carbon. For example, the amorphous carbon may include at least of a non-graphitizable carbon (hard carbon) and graphitizable carbon (soft carbon). The amorphous carbon may have a better rigidity.

The coating layer may have a thickness in a range of about 5 nm to about 50 nm.

For example, the coating layer may be distinguished through Raman spectroscopy, component analysis, and so forth.

The coating layer may hinder or prevent the aggregate and the plurality of silicon particles from being exposed to an electrolyte. The coating layer may reduce or suppress the expansion of the aggregate and the plurality of silicon particles. In addition, the coating layer may be configured as an electron transport pathway between the amorphous carbon, the plurality of silicon particles, and the electrolyte, thereby providing a negative electrode with reduced resistance and increased electrical conductivity.

The coating layer may further include a grain-boundary coating layer that surrounds a surface of each of, or of one of, the plurality of silicon particles. As the coating layer further includes the grain-boundary coating layer, the silicon-carbon composite SCC may have reinforced structural stability and improved electrical conductivity.

The silicon-carbon composite SCC may further include crystalline carbon. For example, the silicon-carbon composite SCC may include an aggregate including a plurality of silicon particles and crystalline carbon. The crystalline carbon may include at least one of natural graphite and artificial graphite. An amount of the crystalline carbon may be in a range of about 1 wt% to about 10 wt% relative to a weight of the silicon-carbon composite SCC. The presence of the crystalline carbon may allow the silicon-carbon composite SCC to have improved electrical conductivity.

The silicon-carbon composite SCC may be present in an amount that is equal to or less than about 12 wt% in the first negative electrode active material layer AML21. For example, an amount of the silicon-carbon composite SCC in the first negative electrode active material layer AML21 may range from about 1 wt% to about 12 wt%, or from about 3 wt% to about 7 wt%.

The silicon-carbon composite SCC may be present in an amount that is equal to or less than about 12 wt% in the second negative electrode active material layer AML23. For example, an amount of the silicon-carbon composite SCC in the second negative electrode active material layer AML23 may range from about 1 wt% to about 12 wt%, or from about 3 wt% to about 7 wt%.

When the amount of the silicon-carbon composite SCC falls within the range above, a rechargeable lithium battery may have desired or improved efficiency, capacity, and lifespan characteristics.

Referring again to FIG. 7, an amount of the first graphite GPH1 may be the same in the first negative electrode active material layer AML21 and in the second negative electrode active material layer AML23, or may be greater in the first negative electrode active material layer AML21 than in the second negative electrode active material layer AML23. For example, an amount ratio of the first graphite GPH1 in the first negative electrode active material layer AML21 to the second negative electrode active material layer AML23 may range from about 1:1 to about 5:1, from about 1:1 to about 4:1, or from about 1:1 to about 3:1. Therefore, it may be possible to reduce resistance of an electrode plate, which is discussed below, and to provide a rechargeable lithium battery having a desired or improved rapid charge lifespan.

In the first negative electrode active material layer AML21, the amount of the first graphite GPH1 may be greater than the amount of the second graphite GPH2. For example, a weight ratio of the first graphite GPH1 to the second graphite GPH2 in the first negative electrode active material layer AML21 may range from about 51:49 to about 99:1, from about 60:40 to about 99:1, from about 70:30 to about 99:1, from about 75:25 to about 95:5, or from about 80:20 to about 95:5. When the weight ratio of the first graphite GPH1 to the second graphite GPH2 in the first negative electrode active material layer AML21 falls within the ranges above, it may be possible to reduce a thickness TKI of the intermediate layer ITL, which is discussed below, to decrease resistance of an electrode plate, and to provide a rechargeable lithium battery having a desired or improved rapid charge lifespan.

A weight ratio of the first graphite GPH1 to the second graphite GPH2 in the second negative electrode active material layer AML23 may range from about 10:90 to about 99:1. For example, the weight ratio of the first graphite GPH1 to the second graphite GPH2 in the second negative electrode active material layer AML23 may range from about 10:90 to about 90:10, from about 15:85 to about 85:15, from about 20:80 to about 80:20, from about 20:80 to about 70:30, from about 20:80 to about 50:50, from about 20:80 to about 40:60, or from about 20:80 to about 30:70.

The first graphite GPH1 may include natural graphite. The first graphite GPH1 may further include soft carbon in addition to the natural graphite. For example, the first graphite GPH1 may include a core including a secondary particle in which primary particles are aggregated, and a coating layer on the core. The primary particles may each include natural graphite. The coating layer may include soft carbon. The coating layer may further include a grain-boundary coating layer that is coated on surfaces of the primary particles in the secondary particle, or along an interface between the primary particles in the secondary particle. For example, the grain-boundary coating layer may include soft carbon.

The first graphite GPH1 may have a desired or improved adhesion to the binder BND. The first graphite GPH1 may hinder or prevent the binder BND from migration in a step of removing a solvent during fabrication of an electrode plate. Therefore, it may be possible to decrease a thickness TKI of the intermediate layer ITL which is discussed below, to reduce resistance of an electrode plate, and to provide a rechargeable lithium battery having a desired or improved rapid charge lifespan.

The first graphite GPH1 may have a relatively small BET specific surface area. The BET specific surface area of the first graphite GPH1 may range from about 1 m$^2$/g to about 2.5 m$^2$/g. For example, the BET specific surface area of the first graphite GPH1 may range from about 1.5 m$^2$/g to about 2.5 m$^2$/g or from about 1.9 m$^2$/g to about 2.2 m$^2$/g.

The first graphite GPH1 may have a peak that corresponds to a (002) plane and a peak that corresponds to a (110) plane in an X-ray diffraction (XRD) spectrum using a CuK$\alpha$ radiation. For example, a maximum intensity of the peak that corresponds to a (002) plane may appear at a diffraction angle (2$\theta$) ranging from about 25° to about 27°. A maximum intensity of the peak that corresponds to a (110) plane may appear at a diffraction angle (2$\theta$) ranging from about 77° to about 78°.

For example, the XRD measurement may be performed under the condition of a diffraction angle (2$\theta$) of about 10° to 80°, a scan rate of about 0.044°/s to about 0.089°/s, and a step size of about 0.013°/step to about 0.039°/step.

In the XRD spectrum of the first graphite GPH1, a maximum peak intensity ratio $I_{(002)}/I_{(110)}$ of the (002) plane and the (110) plane may range from about 50 to about 90. For example, in the XRD spectrum of the first graphite GPH1, the maximum peak intensity ratio $I_{(002)}/I_{(110)}$ of the (002) plane and the (110) plane may be equal to or greater than about 50, 55, or 60. For example, in the XRD spectrum of the first graphite GPH1, the maximum peak intensity ratio $I_{(002)}/I_{(110)}$ of the (002) plane and the (110) plane may be equal to or less than about 90, 85, 80, 75, 70, or 65.

An average particle diameter DGP1 of the first graphite GPH1 may be less than an average particle diameter DGP2 of the second graphite GPH2. The average particle diameter DGP1 of the first graphite GPH1 may be equal to or less than about 10 $\mu$m. For example, the average particle diameter DGP1 of the first graphite GPH1 may be equal to or less than about 9 $\mu$m, 8 $\mu$m, or 7 $\mu$m. For example, the average particle diameter DGP1 of the first graphite GPH1 may be equal to or greater than about 1 $\mu$m, 2 $\mu$m, 3 $\mu$m, 4 $\mu$m, 5 $\mu$m, or 6 $\mu$m.

For example, the average particle diameter DGP1 may be determined by randomly selecting 30 or more particles of the first graphite GPH1 from an electron microscope image of the negative electrode 20 to measure particle diameters, and taking a particle diameter of particles having a cumulative volume of 50 vol% in the particle size distribution as an average particle diameter. For another example, the average particle diameter DGP1 may be obtained by using a particle size analyzer to measure particle diameters, and taking a particle diameter of particles having a cumulative volume of 50 vol% in the particle size distribution as an average particle diameter.

When the first graphite GPH1 satisfies the BET specific surface area, the maximum peak intensity ratio $I_{(002)}/I_{(110)}$ of the (002) plane and the (110) plane, and the average particle diameter DGP1 that are described above, it may be possible to reduce a thickness TKI of the intermediate layer ITL which is discussed below, to decrease resistance of an electrode plate, and to provide a rechargeable lithium battery having a desired or improved rapid charge lifespan.

The second graphite GPH2 may include artificial graphite. The second graphite GPH2 may have a crystallinity that is relatively greater than the crystallinity of the first graphite GPH1. For example, peaks of an XRD spectrum of the second graphite GPH2 may be greater or narrower than peaks of the XRD spectrum of the first graphite GPH1. For example, a peak of an (002) plane of the second graphite GPH2 may be greater or narrower than a peak of the (002) plane of the first graphite GPH1. For example, in the XRD spectrum of the second graphite GPH2, a maximum peak intensity ratio $I_{(002)}/I_{(110)}$ of the (002) plane and the (110) plane in the XRD spectrum of the second graphite GPH2 may be greater than the maximum peak intensity ratio $I_{(002)}/I_{(110)}$ of the (002) plane and the (110) plane in the XRD spectrum of the first graphite GPH1.

The second graphite GPH2 may have a BET specific surface area in a range of about 0.5 m$^2$/g to about 2 m$^2$/g. For example, the BET specific surface area of the second graphite GPH2 may range from about 0.5 m$^2$/g to about 1.5 m$^2$/g.

The average particle diameter DGP2 of the second graphite GPH2 may be greater than the average particle diameter DGP1 of the first graphite GPH1. The average particle diameter DGP2 of the second graphite GPH2 may be equal to or greater than about 10 $\mu$m. For example, the average particle diameter DGP2 of the second graphite GPH2 may be equal to or greater than about 11 $\mu$m, 12 $\mu$m, 13 $\mu$m, or 14 $\mu$m. For example, the average particle diameter DGP2 of the second graphite GPH2 may be equal to or less than about 30 $\mu$m, 25 $\mu$m, 20 $\mu$m, or 15 $\mu$m.

For example, the average particle diameter DGP2 may be obtained by randomly selecting 30 or more particles of the second graphite GPH2 from an electron microscope image of the negative electrode 20 to measure particle diameters, and taking a particle diameter of particles having a cumulative volume of 50 vol% in the particle size distribution as an average particle diameter. For another example, the average particle diameter DGP2 may be obtained by using a particle size analyzer to measure particle diameters, and taking a particle diameter of particles having a cumulative volume of 50 vol% in the particle size distribution as an average particle diameter.

The average particle diameter DGP2 of the second graphite GPH2 may be about 1.5 to 5 times greater than the average particle diameter DGP1 of the first graphite GPH1. For example, the average particle diameter DGP2 of the second graphite GPH2 may be equal to or greater than about 1.5 times or 2 times the average particle diameter DGP1 of the first graphite GPH1. For example, the average particle diameter DGP2 of the second graphite GPH2 may be equal to or less than about 5 times, 4 times, 3 times, or 2.5 times the average particle diameter DGP1 of the first graphite GPH1.

When the average particle diameter DGP2 of the second graphite GPH2 falls within the range above, it may be possible to decrease a thickness TKI of the intermediate layer ITL which is discussed below, to reduce resistance of an electrode plate, and to provide a rechargeable lithium battery having a desired or improved rapid charge lifespan.

The intermediate layer ITL may be positioned between the first negative electrode active material layer AML21 and the second negative electrode active material layer AML23. For example, the intermediate layer ITL may include a mixed layer of the first negative electrode active material layer AML21 and the second negative electrode active material layer AML23. For example, the intermediate layer ITL may include a portion of the first negative electrode active material layer AML21 and a portion of the second negative electrode active material layer AML23.

The intermediate layer ITL may have a thickness TKI that is equal to or less than about 26 $\mu$m. For example, the thickness TKI of the intermediate layer ITL may be equal to or less than about 25 $\mu$m, 24 $\mu$m, 23 $\mu$m, 22 $\mu$m, 21 $\mu$m, 20 $\mu$m, 18 $\mu$m, 16 $\mu$m, 14 $\mu$m, or 13 $\mu$m. For example, the thickness TKI of the intermediate layer ITL may be equal to or greater than about 50 nm, 100 nm, 150 nm, 200 nm, 300 nm, 500 nm, 1 $\mu$m, 2 $\mu$m, 3 $\mu$m, 5 $\mu$m, 7 $\mu$m, or 10 $\mu$m. When the thickness TKI of the intermediate layer ITL falls within the ranges above, it may be possible to reduce resistance of an electrode plate and to provide a rechargeable lithium battery having a desired or improved rapid charge lifespan.

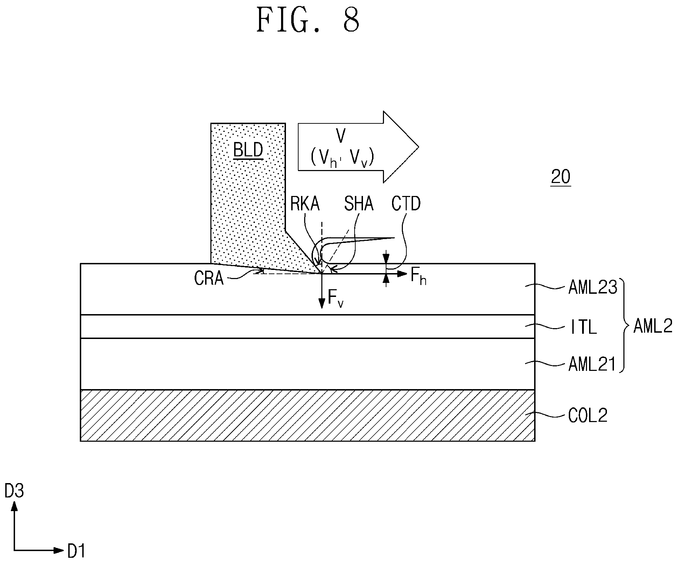

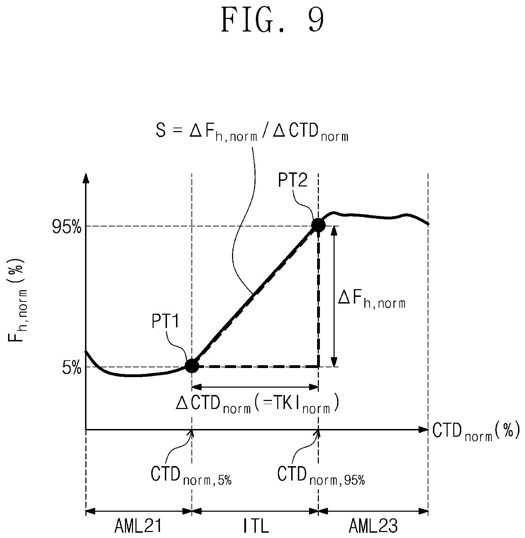

The intermediate layer ITL is further discussed in detail below with reference to FIGS. 8 and 9.

Intermediate Layer ITL

FIG. 8 illustrates a diagram illustrating a procedure for cutting the negative electrode active material layer AML2 of FIG. 6 by using a surface and interfacial measuring analysis system (SAICAS). FIG. 9 illustrates the SAICAS result according to an example embodiment of the present disclosure.

A surface and interfacial measuring analysis system (SAICAS) may be utilized to analyze characteristics of the intermediate layer ITL. The intermediate layer ITL may be defined by normalizing a measurement result obtained using the SAICAS.

The SAICAS may include an apparatus configured to use a blade to diagonally cut a coated thin film sample from the surface thereof to an interface therein, and measure a force exerted on the blade during the cutting procedure.

Referring to FIG. 8, while a surface of the negative electrode active material layer AML2 is cut by a blade BLD at a specific cutting angle until the blade BLD reaches the current collector COL2, a horizontal direction force $F_h$ and a vertical direction force $F_v$ may be measured which are exerted on the blade BLD, the horizontal direction force $F_h$ and the vertical direction force $F_v$ being dependent on a cutting depth CTD. For example, the horizontal direction refers to a D1 direction in FIG. 8, and the vertical direction refers to a D3 direction in FIG. 8. The surface of the negative electrode active material layer AML2 may be in contact with the separator 30. When the cutting is executed at a specific or desired cutting angle, the blade BLD may perform the cutting, while diagonally moving downwards in a depth direction of the negative electrode active material layer AML2. The cutting may continue until the blade BLD reaches the current collector COL2.

A clearance angle CRA may be greater than about 0° and equal to or less than about 15°. For example, the clearance angle CRA may range from about 1° to about 15°, from about 5° to about 13°, or from about 7° to about 12°.

A rake angle RKA may be greater than about 0° and equal to or less than about 30°. For example, the rake angle RKA may range from about 5° to about 30°, from about 10° to about 30°, or from about 15° to about 25°.

A shear angle SHA may range from about 40° to about 50°.

An advance speed V of the blade BLD during the cutting of the negative electrode active material layer AML2 may be defined by a horizontal velocity $V_h$ and a vertical velocity $V_v$. For example, the horizontal velocity $V_h$ may range from about 1 $\mu$m/s to about 20 $\mu$m/s, from about 5 $\mu$m/s to about 15 $\mu$m/s, or from about 7 $\mu$m/s to about 12 $\mu$m/s. For example, the vertical velocity $V_v$ may range from about 0.1 $\mu$m/s to about 5 $\mu$m/s, from about 0.5 $\mu$m/s to about 3 $\mu$m/s, or from about 0.7 $\mu$m/s to about 2 $\mu$m/s.

When the clearance angle CRA, the rake angle RKA, the shear angle SHA, the horizontal velocity $V_h$, and the vertical velocity $V_v$ fall within the ranges above, it may be possible to decrease measurement time and to increase result accuracy.

The blade BLD is not particularly limited as long as the blade BLD has s higher rigidity than the rigidity of the negative electrode active material layer AML2 and does not undergo deformation during the cutting procedure. For example, the blade BLD may be formed of or include at least one of diamond, cubic boron nitride (BN), steel, cermet, ceramic, or the like.

For example, the blade BLD may have a width in a range of about 0.1 mm to about 4 mm, about 0.5 mm to about 2 mm, or about 0.7 mm to about 1.2 mm.

The horizontal direction force $F_h$ may refer to a cohesion force.

The horizontal direction force $F_h$ applied to the blade BLD may be changed based on the cutting depth CTD. As the first negative electrode active material layer AML21 and the second negative electrode active material layer AML23 have different constituents, the horizontal direction force $F_h$ applied to the blade BLD may be different between the first negative electrode active material layer AML21 and the second negative electrode active material layer AML23. For example, the horizontal direction force $F_h$ applied to the blade BLD may be greater on the first negative electrode active material layer AML21 than on the second negative electrode active material layer AML23.

In addition, as the first negative electrode active material layer AML21 and the second negative electrode active material layer AML23 have different constituents, the horizontal direction force $F_h$ applied to the blade BLD may be abruptly changed between the first negative electrode active material layer AML21 and the second negative electrode active material layer AML23. For example, the negative electrode 20 may have a sharp interface between the first negative electrode active material layer AML21 and the second negative electrode active material layer AML23. In this case, the intermediate layer ITL may be defined to refer to a section where the horizontal direction force $F_h$ is abruptly changed between the first negative electrode active material layer AML21 and the second negative electrode active material layer AML23. For example, the intermediate layer ITL may be a section where an abrupt change in cohesion force occurs.

FIG. 9 illustrates a normalized graph of the horizontal direction force $F_h$ applied to the blade BLD that depends on the cutting depth CTD, illustrating a normalized graph, according to an example embodiment of the present disclosure.

Referring to FIG. 9, an x-axis (i.e., transverse-axis) may be a normalized cutting depth $CTD_{norm}$. In this description, the normalized cutting depth $CTD_{norm}$ may be represented by Equation 1.

Normalized cutting depth $CTD_{norm}$ = cutting depth CTD / thickness TKT of negative electrode          Equation 1:

A y-axis (i.e., longitudinal-axis) may be a normalized horizontal direction force $F_{h,norm}$. In this description, the normalized horizontal direction force $F_{h,norm}$ may be represented by Equation 2.

Equation 2:

$$\text{Normalized horizontal direction force } F_{h,norm} = (F_h - F_{h,min})/(F_{h,max} - F_{h,min})$$

In Equation 2, $F_h$ may be a measured horizontal direction force. $F_{h,min}$ may be a minimum value of measured horizontal direction force. $F_{h,max}$ may be a maximum value of measured horizontal direction force.

In the graph, a first point PT1 may be a point where the normalized horizontal direction force $F_{h,nonn}$ is about 5%. A normalized cutting depth at the first point PT1 may be expressed by $CTD_{norm,5\%}$. A second point PT2 may be a point where the normalized horizontal direction force $F_{h,nonn}$ is about 95%. A normalized cutting depth at the second point PT2 may be expressed by $CTD_{norm,95\%}$.

A relative thickness $TKI_{norm}$ of the intermediate layer ITL may be obtained by dividing the thickness of the intermediate layer ITL (see TKI of FIG. 6) by the thickness of the negative electrode 20 (see TKT of FIG. 6). The relative thickness $TKI_{norm}$ of the intermediate layer ITL may be a difference $\Delta CTD_{norm}$ between the normalized cutting depth at the first point PT1 and the normalized cutting depth at the second point PT2. For example, the relative thickness $TKI_{norm}$ of the intermediate layer ITL may be a distance between the normalized cutting depth $CTD_{norm,5\%}$ where the normalized horizontal direction force $F_{h,nonn}$ is 5%, and the normalized cutting depth $CTD_{norm,95\%}$ where the normalized horizontal direction force $F_{h,norm}$ is 95%.

The intermediate layer ITL according to an example embodiment of the present disclosure may have a relatively small thickness (see TKI of FIG. 6). The relative thickness $TKI_{norm}$ of the intermediate layer ITL may be equal to or less than about 33%. In this case, the thickness (see TKI of FIG. 6) of the intermediate layer ITL may be equal to or less than about 33% of the thickness (see TKT of FIG. 6) of the negative electrode 20. For example, the relative thickness $TKI_{norm}$ of the intermediate layer ITL may be equal to or less than about 32%, 31%, 30%, 29%, 28%, 27%, 24%, 21%, 18%, or 16%. For example, the relative thickness $TKI_{norm}$ of the intermediate layer ITL may be equal to or greater than about 0.06%, 0.1%, 0.2%, 0.4%, 0.6%, 1%, 2%, 3%, 6%, 9%, or 13%. When the relative thickness $TKI_{norm}$ of the intermediate layer ITL falls within the ranges above, the horizontal direction force $F_h$ may be abruptly changed between the first negative electrode active material layer AML21 and the second negative electrode active material layer AML23.

The intermediate layer ITL may be a section where the horizontal direction force $F_h$ is abruptly changed between the first negative electrode active material layer AML21 and the second negative electrode active material layer AML23. The intermediate layer ITL may be a section that has a specific or desired slope in a normalized graph. The slope of the intermediate layer ITL may be a slope between the first point PT1 and the second point PT2. The slope of the intermediate layer ITL may be represented by S in accordance with Equation 3 below.

Equation 3:

$$\text{Slope } S = \Delta F_{h,norm} / \Delta CTD_{norm}$$

In Equation 3, $AF_{h,norm}$ may be a variation in the normalized horizontal direction force $F_{h,nonn}$ between the first point PT1 and the second point PT2.

In Equation 3, $\Delta CTD_{norm}$ may be a variation in the normalized cutting depth $CTD_{norm}$ between the first point PT1 and the second point PT2. $\Delta CTD_{norm}$ may be the relative thickness $TKI_{norm}$ of the intermediate layer ITL.

The intermediate layer ITL may have a relatively large value of S. For example, the S value of the intermediate layer ITL may be equal to or greater than about 2.33. For example, the S value of the intermediate layer ITL may be equal to or greater than about 2.35, 2.4, 2.5, 2.6, 2.7, 2.8, 2.9, 3.0, 3.2, or 3.3. For example, the S value of the intermediate layer ITL may be equal to or less than about 1,500, 1,000, 500, 300, 150, 100, 50, 30, 20, 10, 5, or 4. When the S value falls within the range above, the horizontal direction force $F_h$ may be abruptly changed between the first negative electrode active material layer AML21 and the second negative electrode active material layer AML23.

The negative electrode 20 according to an example embodiment of the present disclosure may have the following features.

The negative electrode 20 according to an example embodiment may include the intermediate layer ITL in which the horizontal direction force $F_h$ (or cohesion force) may be abruptly changed between the first negative electrode active material layer AML21 and the second negative electrode active material layer AML23, and which has a relatively small thickness. For example, the intermediate layer ITL may have sharp interface characteristics.

Therefore, the negative electrode 20 according to an example embodiment of the present disclosure may have a relatively low ionic resistance. For example, the ionic resistance of the negative electrode 20 according to an example embodiment of the present disclosure may be equal to or less than about 2,200 $\Omega \cdot$cm, 2,150 $\Omega \cdot$cm, 2,000 $\Omega \cdot$cm, or 1,500 $\Omega \cdot$cm.

A rechargeable lithium battery according to an example embodiment of the present disclosure may have a desired or improved rapid charge lifespan. For example, in a rechargeable lithium battery according to an example embodiment of the present disclosure, when charge and discharge are repeated under the condition of 5 C/0.5 C, a point at which a capacity retention rate reaches about 95% of an initial capacity may be equal to or greater than about 85 cycles. For example, the number of cycles may be equal to or greater than about 90 cycles, 100 cycles, 120 cycles, 130 cycles, 140 cycles, 150 cycles, or 160 cycles.

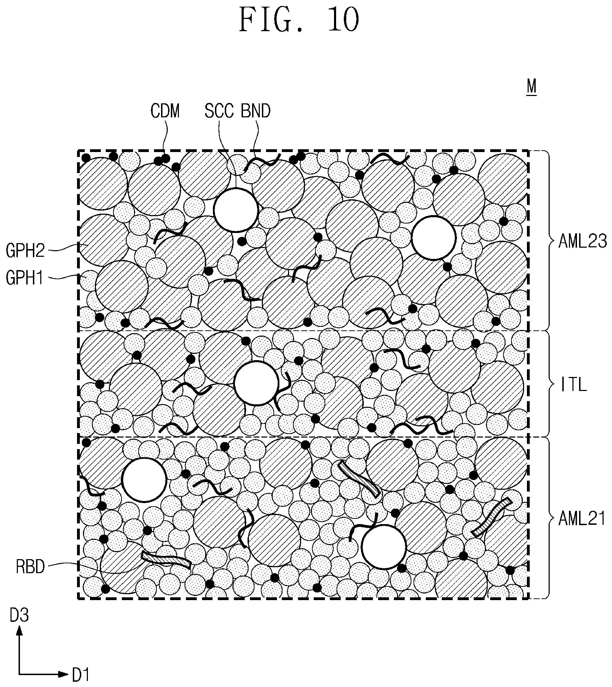

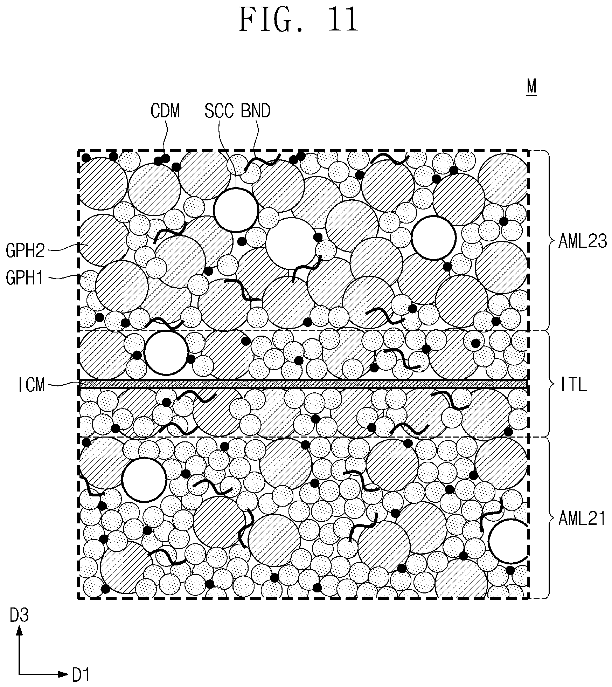

FIGS. 10 and 11 are cross-sectional views illustrating a negative electrode 20 according to some example embodiments of the present disclosure. In the example embodiments that follow, the same features as those discussed above are omitted for convenience of description, and a difference thereof is discussed in detail.

In an example embodiment, referring to FIG. 10, the first negative electrode active material layer AML21 may further include a high rigidity binder RBD in addition to the binder BND. The high rigidity binder RBD may have a desired or improved adhesion to the first graphite GPH1, and the first graphite GPH1 may effectively reduce or prevent migration of the high rigidity binder RBD. A sharp interface may be created between the first negative electrode active material layer AML21 and the second negative electrode active material layer AML23, and the thickness TKI of the intermediate layer ITL may become reduced. Therefore, it may be possible to reduce resistance of an electrode plate and to provide a rechargeable lithium battery having a desired or improved rapid charge lifespan.

The high rigidity binder RBD may include a first repeating unit and a second repeating unit.

The first repeating unit may be derived from a (meth)acrylic acid-based monomer. For example, the (meth)acrylic acid-based monomer may include at least one of a (meth)acrylic acid, a metal salt of (meth)acrylic acid, an ammonium salt of (meth)acrylic acid, and an amine salt of (meth)acrylic acid.

In this description, the expression "(meth)" may indicate the fact that a compound can include or not include, a methyl group. For example, (meth)acrylate may indicate acrylate or methacrylate.

In the metal salt of (meth)acrylic acid, the metal may be or include an alkali metal or an alkaline earth metal. For example, the metal may be or include at least one of lithium, sodium, potassium, calcium, or magnesium. The metal salt of the (meth)acrylic acid may be of include, for example, at least one of sodium acrylate, lithium acrylate, potassium acrylate, calcium acrylate, magnesium acrylate, sodium methacrylate, lithium methacrylate, potassium methacrylate, calcium methacrylate, or a combination thereof.

The ammonium salt of (meth)acrylic acid may be or include ammonium neutralized salt of (meth)acrylic acid.

The amine salt of (meth)acrylic acid may be or include at least one of a monoethanolamine neutralized salt, a diethanolamine neutralized salt, a hydroxylamine neutralized salt, or a combination thereof.

The first repeating unit may include at least one of a carboxyl group (-COOH), a metal salt of carboxylic acid, an ammonium salt of carboxylic acid, an amine salt of carboxylic acid, or a combination thereof. For example, the metal salt of carboxylic acid, the ammonium salt of carboxylic acid, and the amine salt of carboxylic acid may be formed by, after the polymerization of (meth)acrylic acid, replacing H$^+$ of a carboxyl group derived from (meth)acrylic acid units with respective salts. In another example, the metal salt of carboxylic acid, the ammonium salt of carboxylic acid, and the amine salt of carboxylic acid may be formed by polymerizing a mixture of the (meth)acrylic acid, the metal salt of (meth)acrylic acid, the ammonium salt of (meth)acrylic acid, and the amine salt of (meth)acrylic acid.

The second repeating unit may be derived from a (meth)acrylonitrile-based monomer. For example, the (meth)acrylonitrile-based monomer may include (meth)acrylonitrile.

For example, the second repeating unit may include a cyano group.

For example, a weight ratio of the first repeating unit to the second repeating unit may range from about 35:65 to about 65:35. An amount of the first repeating unit may be in a range of about 35 wt% to about 65 wt% relative to the total weight of the high rigidity binder RBD. An amount of the second repeating unit may be in a range of about 35 wt% to about 65 wt% relative to the total weight of the high rigidity binder RBD.

In an example embodiment, referring to FIG. 11, the intermediate layer ITL may further include an ionic conductive material ICM. For example, the ionic conductive material ICM may be positioned between the first negative electrode active material layer AML21 and the second negative electrode active material layer AML23. For example, when the negative electrode 20 is manufactured, the ionic conductive material ICM may be provided in the form of a coating on an interface between the first negative electrode active material layer AML21 and the second negative electrode active material layer AML23.

The ionic conductive material ICM may include at least one of lithium aluminum titanium phosphate (LATP), lithium lanthanum zirconium oxide (LLZO), lithium-carboxymethyl cellulose/lithium-styrene butadiene rubber (Li-CMC/Li-SBR) and its derivative, polytetrafluoroethylene (PTFE), polyvinylidenefluoride (PVdF) and its derivative, and a combination thereof.

The ionic conductive material ICM may be porous. The ionic conductive material ICM may be a solid. The ionic conductive material ICM may be shaped like a film.

The ionic conductive material ICM may reduce or prevent migration of the binder BND. The ionic conductive material ICM may reduce or prevent migration of the binder BND, while substantially maintaining performance of an electrode plate. The ionic conductive material ICM may allow a sharp interface to form between the first negative electrode active material layer AML21 and the second negative electrode active material layer AML23, and the thickness TKI of the intermediate layer ITL may become reduced. Therefore, it may be possible to provide a rechargeable lithium battery having an electrode plate which resistance is reduced, and having a desired or improved rapid charge lifespan.

Although not shown, in an example embodiment, when the negative electrode 20 is manufactured, a first slurry may be coated to form the first negative electrode active material layer AML21 without performing a drying process, and then a second slurry may be coated to form the second negative electrode active material layer AML23, followed by a drying process. For example, a wet-on-dry coating scheme may be utilized to manufacture the negative electrode 20.

Herein, the present disclosure is discussed in detail through example embodiments. These embodiments, however, are provided to illustrate the present disclosure as examples, and the scope of the present disclosure is not limited to these embodiments.

Embodiment 1

A first graphite GPH1 having an average particle diameter was 7 μm which BET specific surface area was 2 m$^2$/g and which maximum peak intensity ratio I$_{(002)}$/I$_{(110)}$ of the (002) and (110) planes was 60 in the XRD spectrum was prepared. The first graphite GPH1 included natural graphite and soft carbon. The first graphite GPH1 included a core including a secondary particle in which primary particles were aggregated and a coating layer on the core. Each of the primary particles included natural graphite, and the coating layer included soft carbon. The coating layer further included a grain-boundary coating layer coated along an interface between the primary particles, and the grain-boundary coating layer included soft carbon.

There was a second graphite GPH2 including artificial graphite which average particle diameter was 14 μm and which BET specific surface area was 1 m$^2$/g.

There was a silicon-carbon composite SCC including an aggregate in which a plurality of silicon particles were aggregated and a coating layer surrounding the aggregate. An average particle diameter of the silicon-carbon composite SCC was 10 μm, a BET specific surface area thereof was 2 m$^2$/g, and a capacity thereof was greater than 1,000 mAh/g.

A negative electrode active material (the silicon-carbon composite SCC and the graphite GPH1 and GPH2 mixed in a weight ratio of 5:90), a conductive material (carbon black and carbon nano-tube), and a binder (carboxymethyl cellulose (CMC) and styrene-butadiene rubber (SBR)) were mixed in a weight ratio of 95:2:3 in a solvent (distilled water) to prepare a first negative electrode slurry. A weight ratio of the first graphite GPH1 to the second graphite GPH2 was 75:25.

A negative electrode active material (the silicon-carbon composite SCC and the graphite GPH1 and GPH2 mixed in a weight ratio of 5:92), a conductive material (carbon black and carbon nano-tube), and a binder (carboxymethyl cellulose (CMC) and styrene-butadiene rubber (SBR)) were mixed in a weight ratio of 97:2:1 to prepare a second negative electrode slurry. A weight ratio of the first graphite GPH1 to the second graphite GPH2 was 25:75.

The first negative electrode slurry was coated on a copper current collector, the second negative electrode slurry was coated on the first negative electrode slurry, and then dried and pressed to manufacture a negative electrode 20. A thickness of the negative electrode 20 was 76 $\mu$m.

Embodiment 2

A negative electrode was manufactured in the same method in Embodiment 1, with a difference that the first negative electrodes slurry further included a high rigidity binder RBD. In the first negative electrodes slurry, the negative electrode active material (the silicon-carbon composite SCC and the graphite GPH1 and GPH2 mixed in a weight ratio of 5:91), the conductive material (carbon black and carbon nano-tube), and the binder (carboxymethyl cellulose (CMC), styrene-butadiene rubber (SBR), and the high rigidity binder RBD) were mixed in a weight ratio of 96:2:2, and the high rigidity binder RBD was present in an amount of about 10 to 20% relative to the total weight of the binder. The high rigidity binder RBD included a first repeating unit derived from acrylic acid and a second repeating unit derived from acrylonitrile.

Embodiment 3

A negative electrode was manufactured in the same method as in Embodiment 1, with a difference that a weight ratio of the first graphite GPH1 to the second graphite GPH2 was 94:6 in the first negative electrode slurry, and that a weight ratio of the first graphite GPH1 to the second graphite GPH2 was 94:6 in the second negative electrode slurry.

Comparative

A third graphite (hereinafter, GPH3) which average particle diameter was 16 $\mu$m, which BET specific surface area was 1.8 $m^2$/g, and which maximum peak intensity ratio $I_{(002)}/I_{(110)}$ of the (002) and (110) planes was 80 in the XRD spectrum was prepared. The third graphite GPH3 included natural graphite and soft carbon. The third graphite GPH3 included a core including a secondary particle in which primary particles were aggregated and a coating layer on the core. Each of the primary particles included natural graphite, and the coating layer included soft carbon. The coating layer further included a grain-boundary coating layer coated along an interface between the primary particles, and the grain-boundary coating layer included soft carbon.

The second graphite GPH2 and the silicon-carbon composite SCC were prepared in the same method as in Embodiment 1.

A negative electrode active material (the silicon-carbon composite SCC and the graphite GPH3 and GPH2 mixed in a weight ratio of 5:90), a conductive material (carbon black and carbon nano-tube), and a binder (carboxymethyl cellulose (CMC) and styrene-butadiene rubber (SBR)) were mixed in a weight ratio of 95:2:3 in a solvent (distilled water) to prepare a third negative electrode slurry. A weight ratio of the third graphite GPH3 to the second graphite GPH2 was 75:25.

A negative electrode active material (the silicon-carbon composite SCC and the graphite GPH3 and GPH2 mixed in a weight ratio of 5:92), a conductive material (carbon black and carbon nano-tube), and a binder (carboxymethyl cellulose (CMC) and styrene-butadiene rubber (SBR)) were mixed in a weight ratio of 97:2:1 in a solvent (distilled water) to prepare a fourth negative electrode slurry. A weight ratio of the third graphite GPH3 to the second graphite GPH2 was 25:75.

The third negative electrode slurry was coated on a copper current collector, the fourth negative electrode slurry was coated on the third negative electrode slurry, and then dried and pressed to manufacture a negative electrode 20. A thickness of the negative electrode 20 was 76 $\mu$m.

Preparation of Symmetric Cell

The negative electrodes were disposed on opposite sides of a polyethylene separator to prepare a symmetric cell.

Fabrication of Rechargeable Lithium Battery

95 wt% of $LiNi_{0.8}Co_{0.15}Al_{0.05}O_2$ positive electrode active material, 2 wt% of polyvinylidenefluoride (PVdF), and 3 wt% of carbon black were mixed in N-methylpyrrolidone to prepare a slurry, and then the slurry was coated, dried, and pressed on an Al foil to manufacture a positive electrode.

The negative electrode, the positive electrode, a polyethylene separator, and an electrolyte were used to fabricate a rechargeable lithium battery. 1 M of $LiPF_6$ was dissolved in an organic solvent containing ethylene carbonate (EC), diethyl carbonate (DEC), and dimethyl carbonate (DMC) mixed in a volume ratio of 2:1:7, and vinylethylene carbonate (VC) was added in an amount of 1 part by weight relative to 100 parts by weight of the organic solvent, thereby preparing the electrolyte.

Experimental Example 1: SAICAS Analysis on Negative Electrode

For the negative electrodes according to Embodiments 1 to 3 and Comparative, a surface and interfacial measuring analysis system (SAICAS) was utilized to measure a horizontal direction force $F_h$ applied to a blade, the horizontal direction force $F_h$ being dependent on a cutting depth CTD while performing a diagonal cutting on a negative electrode active material layer. The measurement conditions were as follows.

Blade type: diamond
Blade width: 1 mm
Rake angle: 20 degrees
Shear angle: 45 degrees
Clearance angle: 10 degrees
Horizontal velocity: 10 micrometers/second
Vertical velocity: 1 micrometer/second
Vertical Sampling Interval; 5/10 microns

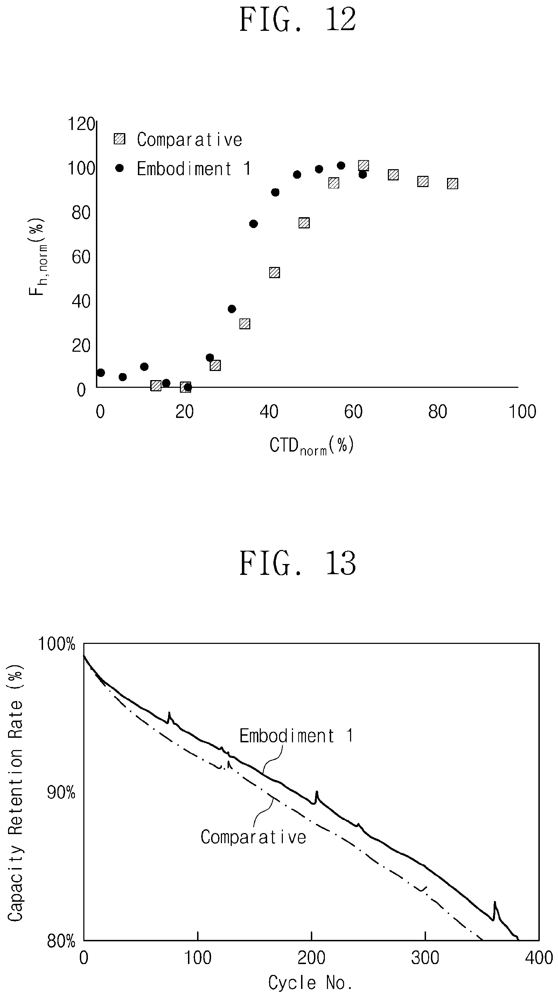

A measurement result was presented as a graph of the horizontal direction force $F_h$ in accordance with the cutting depth CTD. A normalized result of the measurement is illustrated in FIG. 12. A normalized cutting depth $CTD_{norm}$ on an x-axis was represented by dividing the cutting depth CTD by a total thickness of the negative electrode 20. A normalized horizontal direction force $F_{h,norm}$ on a y-axis was represented by a value $(F_h-F_{h,min})/(F_{h,max}-F_{h,min})$ obtained by dividing a difference between a measured horizontal direction force and its minimum value $(F_h-F_{h,min})$ by a difference between its maximum and minimum values $(F_{h,max}-F_{h,min})$. A first point PT1 was defined to refer to a point where the normalized horizontal direction force $F_{h,norm}$ was 5%, and a second point PT2 was defined to refer to a point where the normalized horizontal direction force $F_{h,nonn}$ was 95%.

Table 1 below shows a slope S and a relative thickness $TKI_{norm}$ of the intermediate layer ITL. The relative thickness $TKI_{norm}$ of the intermediate layer ITL was represented by a difference $(CTD_{norm,95\%}-CTD_{norm,5\%})$ between the normalized cutting depth at the first point PT1 and the normalized cutting depth at the second point PT2. The slope S was calculated according to Equation 3 below.

$$\text{Equation 3:}$$

$$\text{Slope S} = \Delta F_{h,norm}/\Delta CTD_{norm}$$

In Equation 3, $\Delta F_{n,norm}$ is a variation in the normalized horizontal direction force $F_{h,nonn}$ between the first point PT1 and the second point PT2. In Equation 3, $\Delta CTD_{norm}$ is a variation in the normalized cutting depth $CTD_{norm}$ between the first point PT1 and the second point PT2, or a relative thickness of the intermediate layer ITL.

Table 1:

| Category | Relative thickness of intermediate layer (%) | Slope S |
|---|---|---|
| Embodiment 1 | 29.0 | 2.36 |
| Embodiment 2 | 21.5 | 3.13 |
| Embodiment 3 | 13.7 | 3.57 |
| Comparative | 35.6 | 2.31 |

Referring to Table 1 above, each of the negative electrodes according to Embodiments 1 to 3 has a thickness that is relatively smaller than the thickness of the negative electrode according to Comparative. In addition, each of the negative electrodes according to Embodiments 1 to 3 has a slope S relatively larger than the slope of the negative electrode according to Comparative. For example, compared to the negative electrode according to Comparative, each of the negative electrode according to Embodiments 1 to 3 has a relatively sharp interface between the first negative electrode active material layer AML21 and the second negative electrode active material layer AML23.

Experimental Example 2: Analysis on Ionic Resistance of Negative Electrode

Each of the negative electrodes according to Embodiments 1 to 3 and Comparative was allowed to evaluate an ionic resistance ($R_{ion}$). The ionic resistance ($R_{ion}$) was measured using a 2-probe method with an impedance analyzer (Solartron 1260A Impedance/Gain-Phase Analyzer). The ionic resistance ($R_{ion}$) was measured by introducing an electrolyte (ethylene carbonate (EC), diethyl carbonate (DEC), and dimethyl carbonate (DMC) mixed in a volume ratio of 2:1:7) into a symmetric cell prepared according to the examples and the comparative example. The ionic resistance ($R_{ion}$) was measured under the conditions of a temperature of 25°C, a frequency range of 0.001 Hz to 1 MHz, and a voltage vias of 10 mV. The result was listed in Table 2 below.

Table 2:

| Category | Ionic resistance ($\Omega \cdot cm$) |
|---|---|
| Embodiment 1 | 1672 |
| Embodiment 2 | 2147 |
| Embodiment 3 | 1238 |
| Comparative | 2219 |

Referring to Table 2 above, each of the negative electrodes according to Embodiments 1 to 3 has a relatively low ionic resistance.

Experimental Example 3: Evaluation of Rapid Charge Lifespan of Rechargeable Lithium Battery

The rechargeable lithium batteries including the negative electrodes of Embodiments 1 to 3 and Comparative were allowed to evaluate their rapid charge lifespan.
The rapid charge lifespan was measured under the following conditions. The rechargeable lithium battery was initially charged to 4.25 V under the condition of a constant current of 0.1 C, rested for 10 minutes, and then initially discharged to 2.5 V under the condition of a constant current of 0.1 C. Afterwards, the rechargeable lithium battery repeatedly underwent a cycle of charging to 4.25 V under the condition of a constant current of 5 C and discharging to 2.5 V under the condition of a constant current of 0.5 C. The rapid charge lifespan result was evaluated by the number of cycles to reach a capacity retention rate of 95% relative to an initial capacity. The result is illustrated in FIG. 13 and Table 3 below.

Table 3:

| Category | Rapid charge lifespan (cycle number) |
|---|---|
| Embodiment 1 | 92 |
| Embodiment 2 | 158 |
| Embodiment 3 | 182 |
| Comparative | 82 |

Referring to Table 3, compared to the rechargeable lithium battery according to Comparative, the rechargeable lithium batteries according to Embodiments 1 to 3 have desired or improved rapid charge lifespan.
A negative electrode according to an example embodiment of the present disclosure may have a low ionic resistance. In addition, the rechargeable lithium battery according to an example embodiment of the present disclosure may have a desired or improved rapid charge lifespan.
Although some example embodiments of the present disclosure have been discussed with reference to accompanying figures, it is understood that various changes in form and details may be made therein without departing from the spirit and scope of the present disclosure. It therefore is understood that the example embodiments described above are just illustrative but not limitative in all aspects.

**Claims**

1. A negative electrode (20), comprising:

a negative electrode current collector (COL); and
a negative electrode active material layer (AML2) on the negative electrode current collector (COL),
wherein the negative electrode active material layer (AML2) comprises:

> a first graphite (GPH1) having a first average particle diameter; and
> a second graphite (GPH2) having a second average particle diameter,
> wherein the second average particle diameter is greater than the first average particle diameter,

wherein the negative electrode active material layer (AML2) further comprises:

> a first negative electrode active material layer (AML21) on the negative electrode current collector (COL);
> a second negative electrode active material layer (AML23) on the first negative electrode active material layer (AML21); and
> an intermediate layer (ITL) between the first negative electrode active material layer (AML21) and the second negative electrode active material layer (AML23),

wherein the intermediate layer (ITL) has a slope (S) that is equal to or greater than 2.33 in a normalized graph obtained by measuring a horizontal direction force ($F_h$), the horizontal direction force ($F_h$) being dependent on a cutting depth (CTD) that is measured while a surface and interfacial measuring analysis system, SAICAS, is used to perform a diagonal cutting from a surface of the negative electrode active material layer (AML2) to the negative electrode current collector (COL).

2. The negative electrode (20) of claim 1, wherein an x-axis of the normalized graph is a normalized cutting depth ($CTD_{norm}$) represented by Equation 1,

Normalized cutting depth ($CTD_{norm}$) = cutting depth (CTD) / thickness (TKT) of negative electrode (20).      Equation 1:

3. The negative electrode (20) according to any of the previous claims, wherein a y-axis of the normalized graph is a normalized horizontal direction force ($F_{h,norm}$) represented by Equation 2,

$$\text{Equation 2:}$$

$$\text{Normalized horizontal direction force } (F_{h,norm}) = (F_h - F_{h,min})/(F_{h,max} - F_{h,min})$$

wherein $F_h$ is the measured horizontal direction force,
wherein $F_{h,min}$ is a minimum value of the measured horizontal direction force, and
wherein $F_{h,max}$ is a maximum value of the measured horizontal direction force.

4. The negative electrode (20) according to any of the previous claims, wherein the normalized graph has a first point (PT1) where a normalized horizontal direction force ($F_{h,nonn}$) is 5% and a second point (PT2) where the normalized horizontal direction force ($F_{h,nonn}$) is 95%,

wherein the slope (S) is represented as a value of S in accordance with Equation 3,

$$\text{Equation 3:}$$

$$S = \Delta F_{h,norm}/\Delta CTD_{norm}$$

wherein, in Equation 3,
$\Delta F_{n,norm}$ is a variation in a normalized horizontal direction force ($F_{h,norm}$) between the first point (PT1) and the second point (PT2), and
$\Delta CTD_{norm}$ is a variation in a normalized cutting depth ($CTD_{norm}$) between the first point (PT1) and the second point (PT2).

5. The negative electrode (20) according to any of the previous claims, wherein a thickness (TKI) of the intermediate layer (ITL) is equal to or less than 33% relative to a thickness (TKT) of the negative electrode (20).

6. The negative electrode (20) according to any of the previous claims, wherein an amount of the first graphite (GPH1) in the first negative electrode active material layer (AML21) is equal to or greater than an amount of the first graphite (GPH1) in the second negative electrode active material layer (AML23).

7. The negative electrode (20) according to any of the previous claims, wherein an amount ratio of the first graphite (GPH1) to the second graphite (GPH2) in the first negative electrode active material layer (AML21) is in a range of 51:49 to 99: 1.

8. The negative electrode (20) according to any of the previous claims, wherein an amount ratio of the first graphite (GPH1) to the second graphite (GPH2) in the second negative electrode active material layer (AML23) is in a range of 10:90 to 99:1.

9. The negative electrode (20) according to any of the previous claims, wherein the first graphite (GPH1) comprises natural graphite.

10. The negative electrode (20) of claim 9, wherein the first graphite (GPH1) further comprises soft carbon.

11. The negative electrode (20) according to any of the previous claims, wherein a Brunauer-Emmet-Teller (BET) specific surface area of the first graphite (GPH1) is in a range of 1 $m^2/g$ to 2.5 $m^2/g$.

12. The negative electrode (20) according to any of the previous claims, wherein the first graphite (GPH1) has a maximum peak intensity ratio of a (002)-plane and a (110)-plane of 50 to 90 in an X-ray diffraction (XRD) spectrum using a CuK$\alpha$ radiation.

13. The negative electrode (20) according to any of the previous claims, wherein the first average particle diameter is equal to or less than 10 $\mu$m.

14. The negative electrode (20) according to any of the previous claims, wherein the second graphite (GPH2) comprises artificial graphite.

15. The negative electrode (20) according to any of the previous claims, wherein the second average particle diameter is equal to or greater than 10 $\mu$m.

# FIG. 1

AML1 COL1     30     AML2 COL2

10              20

# FIG. 2

# FIG. 3

EP 4 726 803 A1

# FIG. 4

# FIG. 5

# FIG. 6

EP 4 726 803 A1

# FIG. 7

# FIG. 8

EP 4 726 803 A1

# FIG. 9

# FIG. 10

# FIG. 11

M

CDM SCC BND

GPH2

GPH1

AML23

ICM

ITL

AML21

D3

D1

# FIG. 12

# FIG. 13

Europäisches
Patentamt

European
Patent Office

Office européen
des brevets

# EUROPEAN SEARCH REPORT

**Application Number**

EP 25 18 9778

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 864 680 A (CHUNENG NEW ENERGY CO LTD) 10 October 2023 (2023-10-10)<br><br>* examples 1 and 9, experimental example 1; table 1 * | 1-4, 6-11, 13-15 | INV.<br>H01M4/133<br>H01M4/36<br>H01M4/587 |
| X | CN 114 156 436 A (PEARL HUAGUAYU POWER BATTERY LTD COMPANY) 8 March 2022 (2022-03-08)<br>* examples 1, 7; table 1 * | 1-15 | |
| A | US 2020/266446 A1 (SCHRODER KJELL WILLIAM [US] ET AL) 20 August 2020 (2020-08-20)<br>* claims 1-2; figures 1-11 * | 1-15 | |
| X | US 2022/344659 A1 (OURA YUJI [JP] ET AL) 27 October 2022 (2022-10-27)<br>* example 1; table 1 *<br>* paragraphs [0065], [0072] - [0081] * | 1-4,6-9, 12-15 | |

**TECHNICAL FIELDS SEARCHED (IPC)**

H01M

The present search report has been drawn up for all claims

| Place of search | Date of completion of the search | Examiner |
|---|---|---|
| The Hague | 4 February 2026 | Agra-Gutierrez, C |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

 
& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 25 18 9778

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2026

| Patent document cited in search report | Publication date | Patent family member(s) | Publication date |
|---|---|---|---|
| CN 116864680 A | 10-10-2023 | NONE | |
| CN 114156436 A | 08-03-2022 | NONE | |
| US 2020266446 A1 | 20-08-2020 | CN 111247668 A | 05-06-2020 |
| | | CN 113078306 A | 06-07-2021 |
| | | DE 202018006528 U1 | 22-01-2021 |
| | | EP 3659195 A1 | 03-06-2020 |
| | | JP 3227744 U | 17-09-2020 |
| | | KR 20200001228 U | 12-06-2020 |
| | | KR 20200053479 A | 18-05-2020 |
| | | KR 20210000614 U | 12-03-2021 |
| | | TW 201921778 A | 01-06-2019 |
| | | US 10038193 B1 | 31-07-2018 |
| | | US 10069145 B1 | 04-09-2018 |
| | | US 2019036125 A1 | 31-01-2019 |
| | | US 2020266446 A1 | 20-08-2020 |
| | | US 2022173397 A1 | 02-06-2022 |
| | | US 2024304814 A1 | 12-09-2024 |
| | | US 2025167234 A1 | 22-05-2025 |
| | | WO 2019023394 A1 | 31-01-2019 |
| US 2022344659 A1 | 27-10-2022 | CN 114424360 A | 29-04-2022 |
| | | EP 4037015 A1 | 03-08-2022 |
| | | EP 4586336 A2 | 16-07-2025 |
| | | JP 7716670 B2 | 01-08-2025 |
| | | JP 2025129407 A | 04-09-2025 |
| | | JP WO2021059705 A1 | 01-04-2021 |
| | | US 2022344659 A1 | 27-10-2022 |
| | | US 2025266455 A1 | 21-08-2025 |
| | | WO 2021059705 A1 | 01-04-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240139118